# NEUE EUROPÄISCHE PATENTSCHRIFT

(11) **EP 2 094 984 B2**
(45) Veröffentlichungstag und Bekanntmachung des Hinweises auf die Entscheidung über den Einspruch: **10.04.2013**
(45) Hinweis auf die Patenterteilung: 07.07.2010
(21) Anmeldenummer: 07822724.6
(22) Anmeldetag: 20.11.2007
(51) Int. Cl.: F16C 29/06

(54) **LINEARFÜHRUNGSEINHEIT**
LINEAR GUIDE UNIT
UNITE DE GUIDAGE LINEAIRE

(30) Priorität: 23.11.2006 DE 102006055196
(43) Veröffentlichungstag der Anmeldung: 02.09.2009
(73) Patentinhaber: Schaeffler Technologies AG & Co. KG, 91074 Herzogenaurach (DE)
(72) Erfinder: NEUFANG, Lothar, 66914 Waldmohr (DE)
(86) Internationale Anmeldenummer: PCT/EP2007/062546
(87) Internationale Veröffentlichungsnummer: WO 2008/061971

(56) Entgegenhaltungen:
- EP-A1- 0 971 140
- DE-A1- 4 210 299
- DE-A1- 4 412 797
- DE-A1- 10 026 587
- DE-A1- 10 026 587
- DE-A1- 10 332 922
- DE-A1- 10 332 922
- DE-A1-102004 043 749

## Beschreibung

Die vorliegende Erfindung betrifft eine Linearführungseinheit, bei der ein Führungswagen auf einer Führungsschiene angeordnet ist.

Aus DE 100 26 587 A1 beispielsweise ist eine lineare Bewegungsvorrichtung nach den Merkmalen des Oberbegriffs des Anspruchs 1 bekannt geworden. Insbesondere der Figur 7 der DE 100 26 587 A1 kann entnommen werden, dass bei dem Endabdichtelement 30 zwischen der Endplatte 20 und einem Dichtungskörper 32 eine Übergabestelle vorgesehen ist, bei der ein O-Ring einen Schmiermittelkanal zur Umgebung hin abdichtet, wobei dieser O-Ring einerseits an der Endplatte 20 und andererseits an dem Abdichtkörper 32 dichtend anliegt. Bei dieser bekannten Linearführungseinheit ist an dem Schmiermittelkanal ein Speicherelement 28 angeschlossen, von dem aus Schmiermittel aufgrund von Kapillarkraft durch Schmiermittel-Zuführlöcher 32b an ein Auftragselement 31 läuft.

In bestimmten Fällen mag es zweckmäßig sein, derartige Schmiermittelkanäle so zu gestalten, dass ein unerwünschtes Zurücklaufen von Schmiermittel oder ein Leerlaufen des Schmiermittelkanals verhindert ist. Aus DE 103 32 922 A1 beispielsweise ist zu diesem Zweck ein Ventil 30 vorgesehen, das den Schmierstoff in lediglich einer Fließrichtung durchlässt.

Aufgabe der vorliegenden Erfindung war es, eine Linearführungseinheit anzugeben, bei der auf einfache Art und Weise eine Übergabestelle im Schmiermittelkanal einwandfrei abgedichtet ist, wobei zusätzlich auf einfache Art und Weise ein unerwünschtes Leerlaufen des Schmiermittelkanals verhindert ist.

Erfindungsgemäß wird diese Aufgabe durch die Linearführungseinheitgemäß Anspruch 1 gelöst. Auf einfache Art und Weise kann beispielsweise ein Dichtring mit der Kontur eines handelsüblichen O-Rings verwendet werden, wobei innerhalb des ringförmig geschlossenen Dichtabschnittes eine Ebene oder eine kegelförmige Wand ausgebildet sein kann, wobei diese Wand mit einem oder mehreren Schlitzen versehen sein kann, sodass bei Druckbeaufschlagung von der einen Seite her der Schlitz öffnet, und wobei bei Druckbeaufschlagung von der anderen Seite her Schlitzwände gegeneinander gedrückt werden und die Schlitze verschließen, so dass kein Schmiermittel zurückfließen kann. Eine Druckbeaufschlagung kann beispielsweise zum Zweck des Nachschmierens erfolgten. Ohne Druckbeaufschlagung bleibt das Ventil geschlossen, das bedeutet, der Schmiermittelkanal kann nicht leerlaufen.

Derartige Dichtringe mit dem erfindungsgemäß kombinierten Ventil können vorzugsweise im Spritzverfahren aus einem elastomeren oder einem thermoplastischen Werkstoff gebildet werden. Es hat sich gezeigt, dass als Thermoplast insbesondere ein thermoplastisches Polyesterelastomer vorteilhaft ist, beispielsweise Hytrel 5555. Bei einem derartigen thermoplastischen Polyesterelastomer lassen sich die Schlitze bereits im Spritzverfahren im Werkzeug berücksichtigen. Aber auch andere Thermoplaste oder Elastomere sind für die Erfindung geeignet, wenn Schlitze in ihrer Ventilfunktion bei Druckbeaufschlagung von der einen Richtung her öffnen. Je nach verwendetem Werkstoff kann der Schlitz bereits im Spritzverfahren im Werkzeug mit vorgesehen werden. Es ist aber auch möglich, dass der Schlitz im Anschluss an das Spritzverfahren in die Wand beispielsweise eingeschnitten wird.

Eine wirtschaftlich besonders interessante erfindungsgemäße Variante sieht vor, dass der Dichtring aus einem spritzbaren Werkstoff gebildet ist, wobei dass als ebene oder kegelförmige Wand ausgebildete Ventil einstückig mit dem ringförmig geschlossenen Dichtabschnitt des Dichtrings verbunden ist. Der Außenumfang der Wand geht dabei in den ringförmig geschlossenen Dichtabschnitt über. Bei einer kegelförmigen Wand geht demzufolge das von der Kegelspitze abgewande Ende in den ringförmig geschlossenen Dichtabschnitt über.

Im Fall einer kegelförmigen Wand kann an der Kegelspitze eine Ventilöffnung elastisch verschließbar gestaltet sein, wobei sich diese Ventilöffnung unter Druckbeaufschlagung in Richtung auf den Umlaufkanal für die Wälzkörper elastisch öffnet. Bei diesem Ausführungsbeispiel zieht sich die Wand an der Kegelspitze soweit zusammen, dass die innere Wandung nur noch als Linie erkennbar ist, so dass kein Schmiermittel mehr fließen kann. Aufgrund der kegelförmigen Gestalt der Wand würde bei einem Überdruck von der Seite des Umlaufkanals her der Druck derart auf diese Kegelspitze ausgeübt werden, dass der Schließeffekt des Ventils sogar noch zunimmt. Erst bei gegenläufiger Druckbeaufschlagung von dem Kegelfuß in Richtung auf die Kegelspitze würde die Kegelwand von innen her aufgeweitet werden, so dass die innere Wandung an der Kegelspitze eine Ventilöffnung begrenzt, durch die nun Schmiermittel hindurchströmen kann.

Es hat sich herausgestellt, dass bereits einfache Schlitze in der ebenen oder kegelförmigen Wand genügen, um die gewünschte Ventilfunktion zu erhalten. Diese Schlitze können einfach ausgebildet sein, es können aber auch mehrere, kreuzförmig angeordnete die Wand durchdringende Schlitze vorgesehen werden, wobei die Schlitzwände elastisch aneinander anliegen und Schlitzöffnungen elastisch verschließen, die sich unter Druckbeaufschlagung in Richtung des Umlaufkanals elastisch öffnen. Im Fall von kreuzförmig angeordneten Schlitzen fluchtet der Kreuzungspunkt vorzugsweise mit der Kegelspitze.

Ein weiterer besonderer Vorteil der Erfindung kann darin gesehen werden, dass bei laufenden Serien von Linearführungseinheiten die Ventilfunktion zusätzliche vorgesehen werden kann, ohne dass es besonderer Änderungen an der Linearführungseinheit bedarf: Denn oftmals werden bei derartigen Linearführungseinheiten O-Ringe eingesetzt, die den Schmiermittelkanal nach außen hin abdichten sollen. Diese O-Ringe brauchen lediglich durch die erfindungsgemäß vorgesehenen Dichtringe ersetzt zu werden, um einerseits die gewünschte Dichtwirkung und andererseits die erfindungsgemäße Ventilwirkung gegen Leerlaufen des Schmiermittelkanals zu erzielen.

Bei einem weiteren Ausführungsbeispiel ist vorgesehen, dass der Führungswagen einen Tragkörper und an die Stirnseiten des Tragkörpers anschließende Endstücke aufweist, wobei die Umlenkabschnitte in den Endstücken angeordnet sind, und wobei jeder Umlenkabschnitt eine Innenumlenkung und eine Außenumlenkung aufweist, wobei Wälzkörper zwischen der Innenumlenkung und der Außenumlenkung umgelenkt werden, und wobei die Außenumlenkung an einer Umlenkschale ausgebildet ist, die mit der Übergabestelle versehen ist. Diese Übergabestelle kann beispielsweise mit einem rohrförmigen dünnwandigen Stutzen versehen sein, der mit einer Durchtrittsöffnung für Schmiermittel versehen ist. Auf diesen Stutzen kann dann der Dichtring aufgebracht sein, wobei das Ventil die Durchtrittsöffnung gegen Leerlaufen des Schmiermittelkanals verschließt.

Ebenso ist es jedoch möglich, die Übergabestelle als zylindrische Ausnehmung auszubilden, in der der erfindungsgemäße Dichtring angeordnet ist, wobei zentrisch zur zylindrischen Ausnehmung eine Durchtrittsöffnung für Schmiermittel ausgebildet ist.

Nachstehend wird die Erfindung anhand von drei in insgesamt acht Figuren abgebildeten Ausführungsbeispielen näher erläutert. Es zeigen:
- Figur 1: eine erfindungsgemäße Linearführungseinheit im Quer- schnitt,
- Figur 2: den Führungswagen der erfindungsgemäßen Linearfüh- rungseinheit in Explosionsdarstellung,
- Figur 3: einen teilweisen Längsschnitt durch den Führungswagen der erfindungsgemäßen Linearführungseinheit,
- Figur 4: eine Detailvergrößerung aus Figur 3,
- Figur 5: eine Einzelheit des Führungswagens gemäß Figur 3 und
- Figuren 6 bis 8: drei erfindungsgemäße Varianten eines Dichtrings der er- findungsgemäßen Linearführungseinheit.

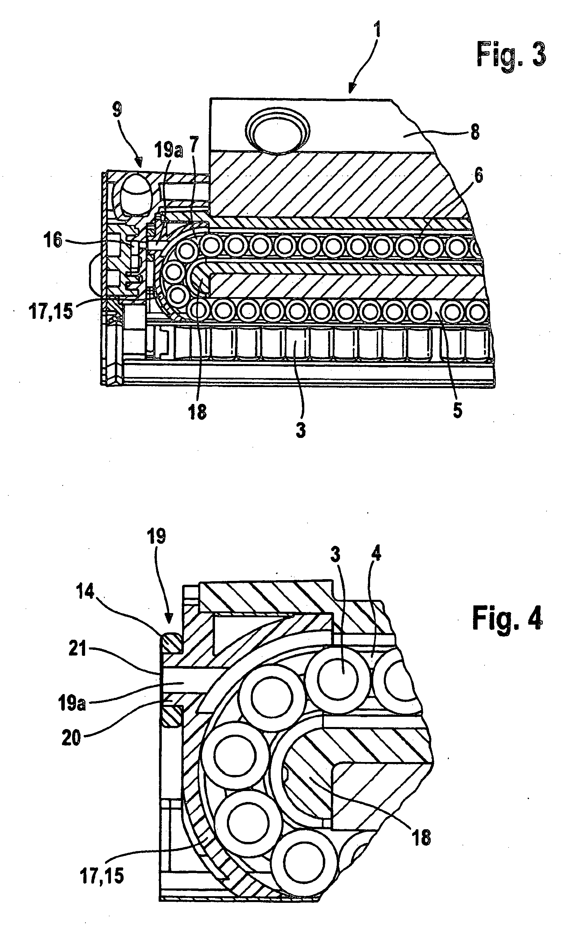

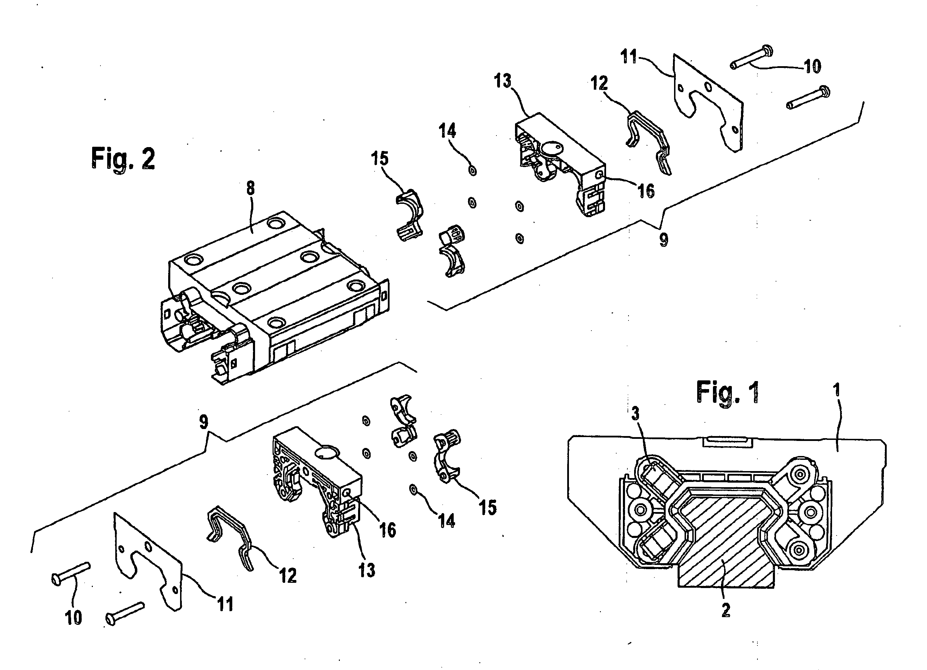

Figur 1 zeigt im Querschnitt eine erfindungsgemäße Linearführungseinheit. Ein Führungswagen 1 ist auf einer Führungsschiene 2 längsverschieblich über als Wälzkörper vorgesehene Rollen 3 wälzgelagert. Die Rollen 3 laufen in endlosen Umlaufkanälen 4 um, wobei Figur 3 in einem teilweisen Längsschnitt einen derartigen Umlaufkanal 4 zeigt. Der Umlaufkanal 4 weist einen Lastabschnitt 5, einen Rücklaufabschnitt 6, und zwei den Rücklaufabschnitt 6 mit dem Lastabschnitt 5 endlos verbindende Umlenkabschnitte 7 auf.

Figur 2 zeigt den Führungswagen 1 in einer Explosionsdarstellung, jedoch ohne die Rollen. Dieser Abbildung ist zu entnehmen, dass der Führungswagen 1 einen Tragkörper 8 aufweist, und stirnseitig an dem Tragkörper 8 angebrachte Endstücke 9. Die beiden Endstücke 9 sind aus einer Vielzahl von Einzelteilen zusammengesetzt: Befestigungsschrauben 10, Abdeckplatte 11, Abstreifer 12, Kappe 13, Dichtringe 14, Umlenkschalen 15.

Die Befestigungsschrauben 10 dienen der Befestigung des Endstücks 9 an dem Tragkörper 8. Der Abstreifer 12 dient dem Abstreifen von Schmutz von der Führungsschiene 2, wenn der Führungswagen 1 entlang der Führungsschiene 2 bewegt wird. Die Kappe 13 nimmt einerseits die Umlenkschalen 15 auf, andererseits sind Schmiermittelkanäle 16 an der Kappe 13 vorgesehen.

Der Figur 3 ist deutlich zu entnehmen, dass die Umlenkschale15 eine Außenumlenkung 17 für die Rollen 3 bildet, wobei die Rollen 3 zwischen der Außenumlenkung 17 und der Innenumlenkung 18 umgelenkt werden. In der Figur 3 sind ebenfalls geschnitten die Schmiermittelkanäle 16 zumindest teilweise abgebildet. Schmiermittel, dass von außen über die Schmiermittelkanäle in Richtung auf die Umlaufkanäle 4 zur Schmierung des Wälzkörperumlaufs eingebracht wird, wird über die Schmiermittelkanäle 16 und eine an der Umlenkschale 15 angebrachte Durchtrittsöffnung 19a in dem Bereich des Umlaufkanals 4 eingebracht.

Figur 4 ist eine Ausschnittsvergrößerung der Figur 3. Darin ist deutlich zu erkennen, dass die Umlenkschale 15 mit einer Übergabestelle 19 versehen ist, an die der Schmiermittelkanal 16 angeschlossen ist. Der Dichtring 14 dichtet den Schmiermittelkanal 16 und die Durchtrittsöffnung 19a nach außen hin ab, so dass kein Schmiermittel in dem Anlagebereich zwischen der Kappe 13 und der Umlenkschale 15 austreten kann.

Die Umlenkschale 15 weist einen rohförmigen dünnwandigen Stutzen 20 auf, auf den der Dichtring 14 aufgesetzt ist. Bei fertig montierten Führungswagen 1 ist der Dichtring 14 zwischen der Umlenkschale 15 und der Kappe 13 eingespannt. Der Figur 4 ist weiter zu entnehmen, dass an dem Dichtring 14 ein Ventil 21 ausgebildet ist, dass ein Leerlaufen des Schmiermittelkanals 16 verhindert. Aufbau und Wirkungsweise des Ventils 21 und weiterer Ventile wird weiter unten näher erläutert.

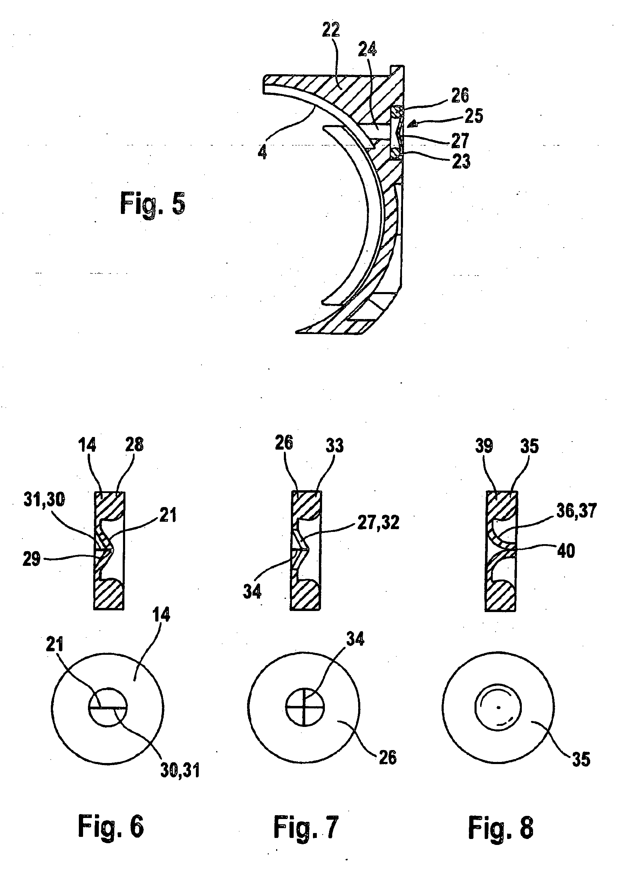

Figur 5 zeigt eine gegenüber Figur 4 modifizierte Umlenkschale 22. Diese Umlenkschale unterscheidet sich von der aus der Figur 4 im Wesentlichen dadurch, dass anstelle des rohrförmigen Stutzens eine zylindrische Ausnehmung 23 ausgebildet ist, an die zentrisch eine Durchtrittsöffnung 24 zu dem Umlaufkanal 4 anschließt, so dass Schmiermittel aus dem Schmiermittelkanal 16 über eine Übergabestelle 25 durch die Durchtrittsöffnung 24 hindurch bis zum Umlaufkanal 4 gelangt. In die zylindrische Ausnehmung 23 ist ein Dichtring 26 eingesetzt, der ebenfalls wie bei dem zuvor beschriebenen Ausführungsbeispiel zwischen der Umlenkschale 22 und der Kappe 13 eingespannt ist, so dass kein Schmiermittel nach außen hin als Leckage austreten kann. Der Dichtring 26 ist ebenfalls mit einem Ventil 27 versehen, das ein Rücklaufen von Schmiermittel aus dem Umlaufkanal 4 durch die Durchtrittsöffnung hindurch zurück in den Schmiermittelkanal 16 verhindert. Ferner verhindert das Ventil 27 ein Leerlaufen des Schmiermittelkanals.

Figur 6 zeigt in einem Querschnitt und in einer Ansicht den Dichtring 14 aus dem ersten Ausführungsbeispiel mit dem Ventil 21. Den beiden Abbildungen in Figur 6 ist zu entnehmen, dass der Dichtring einen ringförmig geschlossenen Dichtabschnitt 28 und eine einstückig an diesem Dichtabschnitt 28 anschließende kegelförmige Wand 29 aufweist. Diese Kegelförmige Wand 29 ist mit einem diese Wand 29 durchdringenden Schlitz 30 versehen. Dieser montierte Dichtring 14 wird so eingesetzt, dass die Kegelspitze in Richtung auf den Umlaufkanal 4 gerichtet ist. Bei Druckbeaufschlagung von der Seite des Schmiermittelkanals 16 her wird die kegelförmige Wand 29 aufgeweitet, wobei der Schlitz 30 so weit geöffnet ist, dass Schmiermittel hindurchtreten kann. Bei gegenläufiger Druckbeaufschlagung würde der anstehende Druck lediglich bewirken, dass den Schlitz begrenzende Schlitzwände 31 noch weiter gegeneinander gedrückt werden, so dass kein Schmiermittel zurücklaufen kann.

Figur 7 zeigt den in der Figur 5 eingesetzten Dichtring 26, mit dem einstückig angeformten Ventil 27. Ebenso wie bei dem zuvor beschriebenen Dichtring schließt auch hier eine kegelförmige Wand 32 einstückig an einen ringförmigen Dichtabschnitt 33 an, wobei diese Wand 32 ebenfalls geschlitzt ist. Abweichend zu dem zuvor beschriebenen Ausführungsbeispiel sind hier jedoch zwei kreuzförmig angeordnete Schlitze 34 vorgesehen.

Figur 8 zeigt ein weiteres Ausführungsbeispiel eines Dichtrings 35, bei dem ebenfalls eine kegelförmige Wand 36 ein Ventil 37 bildet, wobei die Wand 36 mit ihrem von der Kegelspitze abgewandten Ende einstückig an einen ringförmig geschlossenen Dichtabschnitt 39 anschließt. Bei diesem Dichtring 35 ist eine Ventilöffnung 40 vorgesehen, die von der inneren Wandung der Wand 36 begrenzt wird, wobei diese Ventilöffnung 40 durch elastische Kontraktion der Wand 36 verschlossen ist. Unter Druckbeaufschlagung von der Seite des Schmiermittelkanals 16 her wird die Wand 36 elastisch aufgeweitet, so dass die Ventilöffnung 40 zum Durchtritt von Schmiermittel freigegeben wird.

### Bezugszahlenliste

- 1: Führungswagen
- 2: Führungsschiene
- 3: Rolle
- 4: Umlaufkanal
- 5: Lastabschnitt
- 6: Rücklaufabschnitt
- 7: Umlenkabschnitt
- 8: Tragkörper
- 9: Endstück
- 10: Befestigungsschraube
- 11: Deckplatte
- 12: Abstreifer
- 13: Kappe
- 14: Dichtring
- 15: Umlenkschale
- 16: Schmiermittelkanale
- 17: Außenumlenkung
- 18: Innenumlenkung
- 19: Übergabestelle
- 19a: Durchtrittsöffnung
- 20: Stutzen
- 21: Ventil
- 22: Umlenkschale
- 23: zylindrische Ausnehmung
- 24: Durchtrittsöffnung
- 25: Übergabestelle
- 26: Dichtring
- 27: Ventil
- 28: Dichtabschnitt
- 29: kegelförmige Wand
- 30: Schlitz
- 31: Schlitzwand
- 32: kegelförmige Wand
- 33: ringförmiger Dichtabschnitt
- 34: Schlitz
- 35: Dichtring
- 36: Wand
- 37: Ventil
38
- 39: Dichtabschnitt
- 40: Ventilöffnung

## Patentansprüche

1. Linearführungseinheit, mit einem auf einer Führungsschiene (2) angeordneten Führungswagen (1), mit Wälzkörpern (3), die in mehreren endlosen Umlaufkanälen (4) umlaufen, wobei jeder Umlaufkanal (4) einen Lastabschnitt (5), einen Rücklaufabschnitt (6) und zwei, den Lastabschnitt (5) mit dem Rücklaufabschnitt (6) endlos verbindende Umlenkabschnitte (7) aufweist, und wobei der Lastabschnitt (5) von Laufbahnen für die Wälzkörper begrenzt wird, die an dem Führungswagen (1) und an der Führungsschiene (2) ausgebildet sind, und mit an dem Führungswagen (1) ausgebildeten Schmiermittelkanälen (16), die an die Umlaufkanäle (4) angeschlossen sind, wobei der Schmiermittelkanal (16) ein Ende aufweist, das an eine Übergabestelle (19, 25) angeschlossen ist, um Schmiermittel von einem der Schmiermittelkanäle (16) über die Übergabestelle (19, 25) an einen weiteren Schmiermittelkanal oder an den Umlaufkanal (4) zu leiten, wobei zwischen dem Ende des Schmiermittelkanals (16) und der Übergabestelle (19, 25) ein Dichtring (14, 26, 35) mit ringförmig geschlossenem Dichtabschnitt (33, 39, 28) vorgesehen ist, **dadurch gekennzeichnet, dass** der Dichtring (35, 14, 26) innerhalb des ringförmig geschlossenen Dichtabschnitts (28, 33, 39) als Ventil (21, 27, 37) ausgebildet ist, das ein Leerlaufen des Schmiermittelkanals (16) verhindert.

2. Linearführungseinheit nach Anspruch 1, bei der der Führungswagen (1) einen Tragkörper (8) und an die Stirnseiten des Tragkörpers (8) anschließende Endstücke (9) aufweist, wobei die Umlenkabschnitte (7) in den Endstücken (9) angeordnet sind, und wobei jeder Umlenkabschnitt (7) eine Innenumlenkung (18) und eine Außenumlenkung (17) aufweist, wobei Wälzkörper zwischen der Innenumlenkung (18) und der Außenumlenkung (17) umgelenkt werden, und wobei die Außenumlenkung (17) an einer Umlenkschale (15, 22) ausgebildet ist, die mit der Übergabestelle (19, 25) versehen ist.

3. Linearführungseinheit nach Anspruch 1, bei der die Übergabestelle (19) einen rohrförmigen dünnwandigen Stutzen (20) mit einer Durchtrittsöffnung (24) für Schmiermittel aufweist, auf den der Dichtring (14) aufgebracht ist, wobei das Ventil (21) die Durchtrittsöffnung (19a) gegen Leerlaufen des Schmiermittelkanals (16) verschließt.

4. Linearführungseinheit nach Anspruch 1, bei der die Übergabestelle (25) als zylindrische Ausnehmung (23) ausgebildet ist, in der der Dichtring (26) angeordnet ist, wobei zentrisch zur zylindrischen Ausnehmung (23) eine Durchtrittsöffnung (24) für Schmiermittel ausgebildet ist.

5. Linearführungseinheit nach Anspruch 1, bei der der Dichtring (14, 26, 35) aus einem spritzbaren Werkstoff gebildet ist, wobei das eine ebene oder kegelförmige Wand (29, 32, 36) aufweisende Ventil (21, 27, 37) einstückig mit dem ringförmig geschlossenen Dichtabschnitt (28, 33, 39) des Dichtrings (14, 26, 35) verbunden ist.

6. Linearführungseinheit nach Anspruch 5, bei der das von der Kegelspitze abgewandte Ende der kegelförmigen Wand (29, 32, 36) in den ringförmig geschlossenen Dichtabschnitt (28, 33, 39) übergeht.

7. Linearführungseinheit nach Anspruch 6, bei der die die innere Wandung der Wand (36) an der Kegelspitze eine Ventilöffnung (40) elastisch verschließt, die sich unter Druckbeaufschlagung in Richtung des Umlaufkanals (4) elastisch öffnet.

8. Linearführungseinheit nach Anspruch 5, bei der die ebene oder kegelförmige Wand (29, 32, 36) einen einfachen oder mehrere, kreuzförmig angeordnete, die Wand (29, 33) durchdringende Schlitze (30, 34) aufweist, wobei die Schlitzwände (31) elastisch aneinander anliegen und Schlitzöffnungen elastisch verschließen, die sich unter Druckbeaufschlagung in Richtung des Umlaufkanals (4) öffnen.

9. Linearführungseinheit nach Anspruch 8, bei der ein Kreuzungspunkt der kreuzförmig angeordneten Schlitze (34) mit der Kegelspitze fluchtet.

10. Linearführungseinheit nach Anspruch 1, bei der als Werkstoff für das Ventil (21, 27, 37) ein Elastomer oder ein Thermoplast, insbesondere ein thermoplastisches Polyesterelastomer verwendet wird.

11. Linearführungseinheit nach Anspruch 8, bei der der wenigstens einfache Schlitz (30, 34) nachträglich an der im Spritzverfahren hergestellten Wand (29, 32) erzeugt, bspw. geschnitten oder gestanzt wird.

12. Linearführungseinheit nach Anspruch 8, bei der der wenigstens einfache Schlitz (30, 34) an der im Spritzverfahren hergestellten Wand (29, 32) während des Spritzens im Spritzwerkzeug erzeugt wird.

## Claims

1. Linear guide unit, having a guide carriage (1) arranged on a guide rail (2), having rolling bodies (3) which circulate in a plurality of endless encircling channels (4), with each encircling channel (4) having a load section (5), a return section (6) and two deflecting sections (7) which connect the load section (5) to the return section (6) in an endless fashion, and with the load section (5) being delimited by raceways for the rolling bodies, which raceways are formed on the guide carriage (1) and on the guide rail (2), and having lubricant channels (16) which are formed on the guide carriage (1) and which are connected to the encircling channels (4), with the lubricant channel (16) having an end which is connected to a transfer point (19, 25) in order to conduct lubricant from one of the lubricant channels (16) via the transfer point (19, 25) to a further lubricant channel or to the encircling channel (4), with a sealing ring (14, 26, 35) which has an annularly closed sealing section (33, 39, 28) being provided between the end of the lubricant channel (16) and the transfer point (19, 25), **characterized in that** the sealing ring (14, 26, 35) is formed, within the annularly closed sealing section (28, 33, 39), as a valve (21, 27, 37) which prevents the lubricant channel (16) from running dry.

2. Linear guide unit according to Claim 1, in which the guide carriage (1) has a support body (8) and has end pieces (9) adjoining the end sides of the support body (8), with the deflecting sections (7) being arranged in the end pieces (9) and with each deflecting section (7) having an inner deflection (18) and an outer deflection (17), with rolling bodies being deflected between the inner deflection (18) and the outer deflection (17), and with the outer deflection (17) being formed on a deflecting shell (15, 22) which is provided with the transfer point (19, 25).

3. Linear guide unit according to Claim 1, in which the transfer point (19) has a tubular thin-walled pipe stub (20) with a passage opening (24) for lubricant, to which pipe stub (20) the sealing ring (14) is attached, with the valve (21) closing off the passage opening (19a) to prevent the lubricant channel (16) from running dry.

4. Linear guide unit according to Claim 1, in which the transfer point (25) is designed as a cylindrical recess (23) in which the sealing ring (26) is arranged, with a passage opening (24) for lubricant being formed centrally with respect to the cylindrical recess (23).

5. Linear guide unit according to Claim 1, in which the sealing ring (14, 26, 35) is formed from an injection-mouldable material, with the valve (21, 27, 37), which has a planar or conical wall (29, 32, 36), being connected in a unipartite fashion to the annularly closed sealing section (28, 33, 39) of the sealing ring (14, 26, 35).

6. Linear guide unit according to Claim 5, in which that end of the conical wall (29, 32, 36) which faces away from the cone tip merges into the annularly closed sealing section (28, 33, 39).

7. Linear guide unit according to Claim 6, in which the inner surface of the wall (36) elastically closes off a valve opening (40) at the cone tip, which valve opening (40) opens elastically in the direction of the deflecting channel (4) under the action of pressure.

8. Linear guide unit according to Claim 5, in which the planar or conical wall (29, 32, 36) has one or more slots (30, 34) which are arranged in a crossed fashion and which extend through the wall (29, 33), with the slot walls (31) bearing elastically against one another and elastically closing off slot openings which open in the direction of the deflecting channel (4) under the action of pressure.

9. Linear guide unit according to Claim 8, in which a point of intersection of the slots (34) which are arranged in a crossed fashion is aligned with the cone tip.

10. Linear guide unit according to Claim 1, in which an elastomer or a thermoplastic, in particular a thermoplastic polyester elastomer, is used as material for the valve (21, 27, 37).

11. Linear guide unit according to Claim 8, in which the at least one slot (30, 34) is generated, for example cut or punched, retroactively in the wall (29, 32) which is produced in an injection-moulding process.

12. Linear guide unit according to Claim 8, in which the at least one slot (30, 34) is generated in the wall (29, 32), which is produced in an injection-moulding process, during the injection moulding in the injection-moulding tool.

## Revendications

1. Unité de guidage linéaire, comprenant un chariot de guidage (1) disposé sur un rail de guidage (2), des corps de roulement (3), qui roulent dans plusieurs canaux circonférentiels sans fin (4), chaque canal circonférentiel (4) présentant une portion de charge (5), une portion de retour (6) et deux portions de renvoi (7) reliant sans fin la portion de charge (5) à la portion de retour (6), la portion de charge (5) étant limitée par des pistes de roulement pour les corps de roulement, qui sont réalisées sur le chariot de guidage (1) et sur le rail de guidage (2), et des canaux de lubrifiant (16) réalisés sur le chariot de guidage (1), qui sont raccordés aux canaux circonférentiels (4), le canal de lubrifiant (16) présentant une extrémité qui est raccordée à un point de transfert (19, 25), afin de conduire du lubrifiant depuis l'un des canaux de lubrifiant (16) par le biais du point de transfert (19, 25) à un autre canal de lubrifiant ou au canal circonférentiel (4), une bague d'étanchéité (14, 26, 35) avec une portion d'étanchéité fermée sous forme annulaire (33, 39, 28) étant prévue entre l'extrémité du canal de lubrifiant (16) et le point de transfert (19, 25), **caractérisée en ce que** la bague d'étanchéité (14, 26, 35) est réalisée à l'intérieur de la portion d'étanchéité fermée sous forme annulaire (28, 33, 39) sous forme de soupape (21, 27, 37), qui empêche que le canal de lubrifiant (16) ne se vide complètement.

2. Unité de guidage linéaire selon la revendication 1, dans laquelle le chariot de guidage (1) présente un corps porteur (8) et des embouts (9) se raccordant aux côtés frontaux du corps porteur (8), les portions de renvoi (7) étant disposées dans les embouts (9) et chaque portion de renvoi (7) présentant un renvoi interne (18) et un renvoi externe (17), des corps de roulement étant renvoyés entre le renvoi interne (18) et le renvoi externe (17), et le renvoi externe (17) étant réalisé sur une coque de renvoi (15, 22) qui est pourvue du point de transfert (19, 25).

3. Unité de guidage linéaire selon la revendication 1, dans laquelle le point de transfert (19) présente une tubulure à paroi mince (20) de forme tubulaire, avec une ouverture de passage (24) pour du lubrifiant, contre laquelle la bague d'étanchéité (14) est appliquée, la soupape (21) fermant l'ouverture de passage (19a) pour empêcher que le canal de lubrifiant (16) ne se vide complètement.

4. Unité de guidage linéaire selon la revendication 1, dans laquelle le point de transfert (25) est réalisé sous forme d'évidement cylindrique (23), dans lequel est disposée la bague d'étanchéité (26), une ouverture de passage (24) pour du lubrifiant étant réalisée centralement par rapport à l'évidement cylindrique (23).

5. Unité de guidage linéaire selon la revendication 1, dans laquelle la bague d'étanchéité (14, 26, 35) est formée en un matériau pulvérisable, la soupape (21, 27, 37) présentant une paroi plane ou conique (29, 32, 36) étant connectée d'une seule pièce à la portion d'étanchéité (28, 33, 39) de la bague d'étanchéité (14, 26, 35) fermée sous forme annulaire.

6. Unité de guidage linéaire selon la revendication 5, dans laquelle l'extrémité de la paroi de forme conique (29, 32, 36) opposée à la pointe du cône se prolonge par la portion d'étanchéité (28, 33, 39) fermée sous forme annulaire.

7. Unité de guidage linéaire selon la revendication 6, dans laquelle la paroi interne de la paroi (36) ferme élastiquement une ouverture de soupape (40) au niveau de la pointe du cône, laquelle s'ouvre élastiquement sous l'effet d'une sollicitation en pression dans la direction du canal circonférentiel (4).

8. Unité de guidage linéaire selon la revendication 5, dans laquelle la paroi (29, 32, 36) plane ou conique présente une fente simple ou plusieurs fentes (30, 34) disposées en forme de croix, traversant la paroi (29, 33), les parois des fentes (31) s'appliquant élastiquement les unes contre les autres et fermant des ouvertures de fentes de manière élastique, lesquelles s'ouvrent sous l'effet d'une sollicitation par pression dans la direction du canal circonférentiel (4).

9. Unité de guidage linéaire selon la revendication 8, dans laquelle un point d'intersection des fentes (34) disposées en forme de croix est en affleurement avec la pointe du cône.

10. Unité de guidage linéaire selon la revendication 1, dans laquelle on utilise comme matériau pour la soupape (21, 27, 37) un élastomère ou un thermoplastique, notamment un élastomère polyester thermoplastique.

11. Unité de guidage linéaire selon la revendication 8, dans laquelle l'au moins une fente simple (30, 34) est ultérieurement produite sur la paroi (29, 32) fabriquée par un procédé de pulvérisation, par exemple est découpée ou estampée.

12. Unité de guidage linéaire selon la revendication 8, dans laquelle l'au moins une fente simple (30, 34) est produite sur la paroi (29, 32) fabriquée dans un procédé de pulvérisation, pendant la pulvérisation dans l'outil de pulvérisation.
